# EUROPÄISCHE PATENTSCHRIFT

(11) **EP 1 786 593 B1**
(45) Veröffentlichungstag und Bekanntmachung des Hinweises auf die Patenterteilung: **20.08.2008**
(21) Anmeldenummer: 05798046.8
(22) Anmeldetag: 06.09.2005
(51) Int. Cl.: B23Q 1/28, F16C 29/10

(54) **BREMS- UND KLEMMEINRICHTUNG MIT GETRIEBE FÜR EINE LINEARFÜHRUNG**
BRAKING AND CLAMPING DEVICE COMPRISING A DRIVE
DISPOSITIF DE FREINAGE ET/OU DE VERROUILLAGE COMPORTANT UNE TRANSMISSION

(30) Priorität: 09.09.2004 DE 102004044052
(43) Veröffentlichungstag der Anmeldung: 23.05.2007
(73) Patentinhaber: Zimmer, Günther, 77866 Rheinau (DE); Zimmer, Martin Johannes, 77866 Rheinau (DE)
(72) Erfinder: Zimmer, Günther, 77866 Rheinau (DE); Zimmer, Martin Johannes, 77866 Rheinau (DE)
(74) Vertreter: Thämer, Wolfgang
(86) Internationale Anmeldenummer: PCT/DE2005/001554
(87) Internationale Veröffentlichungsnummer: WO 2006/026966

(56) Entgegenhaltungen:
- EP-A1- 0 763 668
- DE-A1- 3 742 965
- DE-A1- 19 805 449
- DE-U1- 20 002 915
- JP-A- 61 266 825

## Beschreibung

Die Erfindung betrifft eine Klemm- und/oder Notbremsvorrichtung zur Anbringung an einem mittels mindestens einer Führungsschiene geführten Schlitten, wobei die Führungsschiene wenigstens eine Hintergriffkontur aufweist, wobei die Vorrichtung mindestens ein Reibgehemme umfasst, das wenigstens eine, an die Führungsschiene entgegen der Wirkrichtung der Haltekraft der Hintergriffskontur anpressbare Reibbacke aufweist und wobei das Reibgehemme mittels der Federkraft mindestens eines Federelements in eine Richtung und mittels eines pneumatischen, hydraulischen, elektromagnetischen, elektromechanischen oder piezoelektrischen Antriebs erzeugter Vorschubkraft in die entgegengesetzte Richtung bewegt wird.

Aus der DE 199 02 596 A1 und der US 4,953,988 sind derartige Klemmungen für Linearantriebe bekannt. Sie benötigen jedoch zum Aufbringen der erforderlichen Klemmkräfte ein großes Bauvolumen.

Der vorliegenden Erfindung liegt die Problemstellung zugrunde, eine Brems- und/oder Klemmvorrichtung zu entwickeln, die bei großen Klemmkräften einen einfachen und bauraumsparenden Aufbau hat und zudem dauerhaft wartungsfrei ist.

Diese Problemstellung wird mit den Merkmalen des Hauptanspruches gelöst. Dazu ist zwischen dem die Klemmkraft aufbringenden Antrieb und der Reibbacke mindestens ein einstufiges mechanisches oder pneumatisch/hydraulisches kraftübersetzendes Getriebe angeordnet.

Als Getriebe zwischen einem z.B. flach bauenden pneumatischen Zylinder-Kolben-Antrieb oder einem Membranantrieb und einer Reibbacke wird ein bauraumsparendes Hebelgetriebe eingesetzt, um die erforderliche Klemmkraft aufzubringen. Dabei kann der Antrieb, das Getriebe und die Reibbacke beispielsweise als komplette Vorrichtung bzw. Baugruppe aufgebaut sein. Diese Baugruppe kann bei der Montage der entsprechenden Maschine zwischen einen Schlitten und seine Führung eingebaut werden. Dazu wird sie zwischen dem Führungsschuh und dem Schlitten integriert. In den Ausführungsbeispielen hat der entsprechende Führungsschuh hierzu eine Bohrung, die sich zwischen der Schuhmontagefläche und der Führungsschiene erstreckt. Ggf. kann die Vorrichtung auch im Raum zwischen zwei auf einer Führungsschiene benachbarten Führungsschuhen montiert sein.

Selbstverständlich kann die Vorrichtung auch vollständig in einen Führungsschuh oder in den Schlitten integriert werden.

Die Vorrichtung ist nicht auf lineare Führungen beschränkt. Sie kann auch auf Kreisbahnen oder anderen z.B. in einer Ebene liegenden gekrümmten Bahnen verwendet werden.

Weitere Einzelheiten der Erfindung ergeben sich aus den Unteransprüchen und der nachfolgenden Beschreibung schematisch dargestellter Ausführungsformen.
- Figur 1:: Dimetrische Ansicht einer Brems- und/oder Klemmvorrichtung;
- Figur 2:: Teilquerschnitt einer Brems- und/oder Klemmvorrichtung mit Führungsschiene;
- Figur 3:: Horizontalschnitt durch einen Teil der Vorrichtung;
- Figur 4:: Dimetrische Ansicht des vorderen Hebels zu Figur 1;
- Figur 5:: Dimetrische Ansicht des hinteren Hebels zu Figur 1
- Figur 6:: Querschnitt zu Figur 2 bei unbetätigter Klemmung;
- Figur 7:: Querschnitt zu Figur 2 bei betätigter Klemmung;
- Figur 8:: Vorrichtung mit gummielastischen Elementen;
- Figur 9:: Vergrößerte Hebelzwangskopplung zu Figur 8;
- Figur 10:: Vorrichtung mit sich kreuzenden Hebeln;
- Figur 11:: Vorrichtung mit zweistufigem Getriebe;
- Figur 12:: Hebel in Startlage;
- Figur 13:: Hebel in Mittellage;
- Figur 14:: Hebel in Endlage;
- Figur 15:: Hebelprinzip zu Figur 12;
- Figur 16:: Hebelprinzip zu Figur 13;
- Figur 17:: Hebelprinzip zu Figur 14;
- Figur 18:: Längsschnitt durch ein Schiebekeilgetriebe;
- Figur 19:: Querschnitt zu Figur 18.

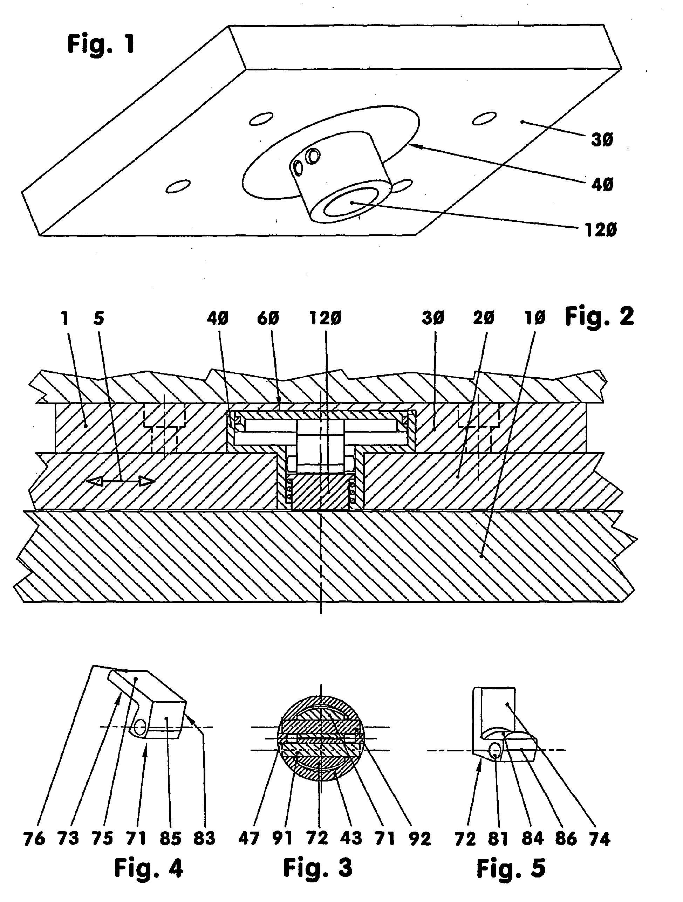

Die Figur 1 zeigt eine Brems- und/oder Klemmvorrichtung in Form einer Adapterplatte (30) mit integriertem Reibgehemmeantrieb. Die relativ niedrig gestaltete Adapterplatte (30) inklusive des Reibgehemmeantriebs wird z.B. innerhalb einer Schlittenführung zwischen einem auf einer ortsfesten Führungsschiene (10) geführten Führungsschuh (20) und dem vom Führungsschuh (20) getragenen Schlitten (1) adaptiert.

Die Führungsschiene (10) hat auf beiden Seiten (13, 14) beispielsweise je zwei Kugelführungsbahnen (15, 16), die mit den Kugelführungsbahnen (21, 22) des Führungsschuhes (20) - über die in den Kugelführungsbahnen abrollenden Wälzkörper (27) - zusammenwirken. Die Kugelführungsbahnen (15, 16; 21, 22) sind so an der Führungsschiene (10) angeordnet, dass der an den Führungsschienen (10) gelagerte Schlitten (1) nur einen einzigen Freiheitsgrad hat, wobei dieser entlang der Führungslängsrichtung (5) orientiert ist.

Um dies zu erzielen stellt mindestens eine Kugelführungsbahn (15) pro Führungsschienenseite (13, 14,) eine Hintergriffskontur dar. Dies gilt auch für den entsprechenden Führungsschuh (20).

Der in den Figuren 2, 6 und 7 dargestellte Führungsschuh (20) hat eine Bohrung (23), deren Mittelinie (24) in der Regel in der vertikalen Mittenlängsebene (6) der Führungsschiene (1) liegt und zudem normal zur Führungsschienenoberseite (11) orientiert ist. In dieser Bohrung (23) zentriert sich die Adapterplatte (30) über das z.B. einteilige Gehäuse (40) des Reibgehemmeantriebs.

Das Gehäuse (40) hat die Form einer zweistufigen Buchse. Die untere Stufe (43), sie hat einen Durchmesser, der maximal halb so groß ist wie der Durchmesser der oberen Stufe (53), lagert nach den Figuren 1 bis 8 ein mechanisches Hebelgetriebe (70), eine Reibbacke (120) und ein Rückholfederelement (122). Die obere Stufe (53) ist Teil des Zylinders einer pneumatischen oder hydraulischen Zylinder-Kolben-Einheit (60).

Die obere Stufe (53) des Gehäuses (40) sitzt in einer Sacklochbohrung (31) der Adapterplatte. Gegen die Bohrungswandung ist das Gehäuse (40) mit einem O-Ring (38) abgedichtet. Letzterer liegt z.B. in einer in der Bohrungswandung eingearbeiteten Ringnut (32). Der zwischen den beiden Stufen (43, 53) des Gehäuses (40) gelegene plane Absatz (55) fluchtet mit der Unterseite der Adapterplatte (30).

Der obere Rand (56) des Gehäuses'(40) ist zu dem z.B. planen Boden (33) der Sacklochbohrung (31) mit einen geringen Spiel beabstandet. In den Rand (56), der zur Zylinderinnenwandung (54) eine Fase (57) oder einen Absatz aufweist, ist mindestens eine radiale Nut (58) oder Kerbe eingearbeitet. Über die Fase (57), das Spiel zwischen dem Boden (33) und dem Rand (56), sowie über die Nut (58) wird der Zylinderinnenraum (64) der Zylinder-Kolben-Einheit (60)mit dem Druckmittel zur Betätigung der Vorrichtung versorgt. Dazu endet an der Sacklochbohrung (31) eine Druckmittelbohrung (34) im Bereich vor der Fase (57).

In der Zylinderinnenwandung (54) ist ein z.B. kolbenstangenloser Kolben (61) geführt. Der einen Dichtring tragende Kolben (61) hat eine zentrale Ausnehmung (62), um dort u.a. Platz für das Hebelgetriebe (70) zur Verfügung zu stellen. Die Ausnehmung (62) ist in den Ausführungsbeispielen der Figuren 2, 6 - 8 z.B. ein zentrales Sackloch mit planem Boden. Der Kolbenboden hat innen zusätzlich eine Erhebung (63), u.a. um das in den Innenraum (64) einströmende Druckmittel schneller zu verteilen.

Die untere Stufe (43) des Gehäuses (40) hat ebenfalls einen zylindrischen Innenraum (41), in dem die Reibbacke (120) federbelastet gelagert ist. Im Boden (45) der unteren Stufe (43) befindet sich eine zentrale Bohrung (46) zur Führung der Reibbacke (120). An der Wandung des Innenraumes (41) ist die Reibbacke (120) über einen flanschartigen Kragen (121) zusätzlich geführt.

Zwischen dem Kragen (121) und dem Boden (45) ist als Rückholfederelement (122) eine Schraubenfeder angeordnet. Das Rückholfederelement (122) ist hierbei an der Wandung des Innenraumes (41) oder der Wandung der Reibbacke (120) geführt. Der Durchmesser der Bohrung (45) ist hier um die doppelte Summe aus der Drahtstärke des Rückholfederelements (122) und einem entsprechenden Führungsspiel kleiner als der Durchmesser des Innenraumes (41).

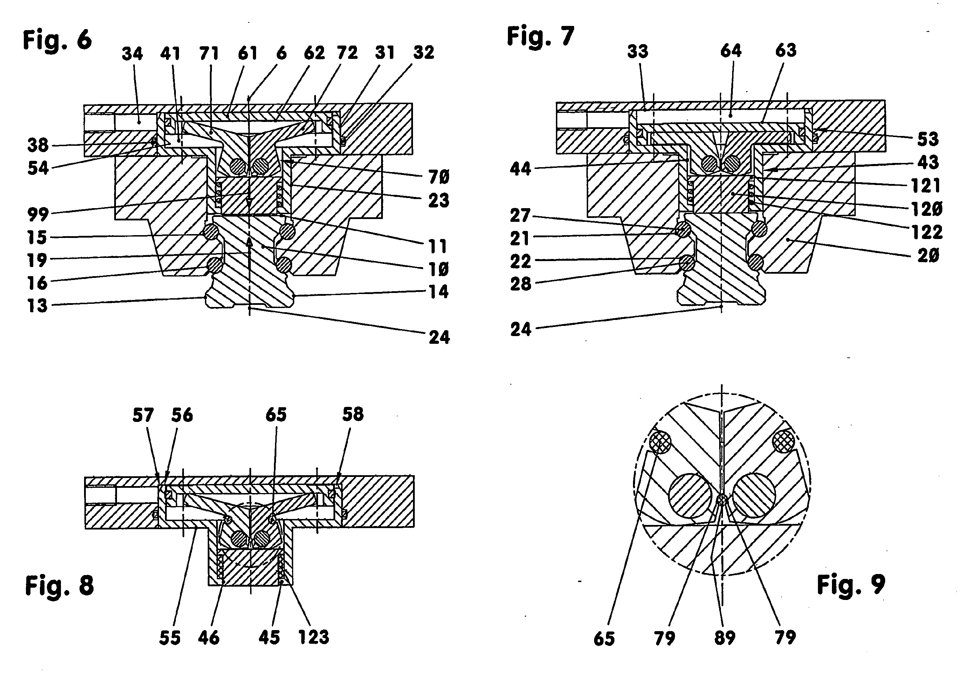

Das Rückholfederelement kann auch ein elastisches Gummi- oder Kunststoffbauteil (123) sein, das zwischen der Reibbacke (120) und der unteren Stufe (43) eingelegt ist, vgl. Figur 8.

Der Kragen (121) und die Bohrung (45) weisen i.d.R. jeweils eine Kerbe, Abflachung oder Nut auf, um den Innenraum (41) zur Be- und Entlüftung mit der Umgebung zu verbinden.

Die untere Stufe (43) des Gehäuses (40) hat kurz unterhalb des Absatzes (55) zwei durchgehende Querbohrungen (47) zur Lagerung von Schwenkbolzen (91, 92).

Zwischen dem Kolben (61) und der Reibbacke (120) ist nach den Figuren 2, 6 bis 8 das Hebelgetriebe (70) angeordnet. Die Hebel (71, 72) sind in den Figuren 4 und 5 separat dargestellt. Die abgewinkelt gekrümmten Hebel (71, 72) haben jeweils eine z.B. quer zum Hebel verlaufende Bohrung (81), über die sie auf den Schwenkbolzen (91, 92) gelagert sind. Die Schwenkbolzen (91, 92) können beispielsweise Knebelkerbstifte oder Spannstifte sein, die bei der Montage in den Hebeln (71, 72) verstaucht werden.

Der einzelne Hebel (71, 72) hat einen oberen (73) und einen unteren Hebelabschnitt (83). Beide sind zueinander zumindest bezüglich der Vorderflächen (74, 84) annähernd rechtwinkelig orientiert. Die Rückenfläche (85) des unteren Abschnittes (83) ist oberhalb der Bohrung (81) eben und schließt mit der ebenfalls z.B. ebenen Rückenfläche (75) des oberen Abschnittes (73) z.B. einen Winkel von 105 Winkelgraden ein.

Der obere (73) und der untere Abschnitt (83) haben jeweils eine zumindest um eine Achse gewölbte Gleitfläche (76, 86). Über die Gleitfläche (76) liegt der Hebel (71, 72) am Kolben (61) an, während sich an der Gleitfläche (86) die federbelastete Reibbacke (120) abstützt. In Ausführungsbeispiel sind die Gleitflächen (76, 86) Mantelabschnitte zweier Zylinder. Der Radius der Gleitfläche (86) ist zur Verringerung der Flächenpressung an der Paarung Hebel/Reibbacke mindestens um den Faktor Zwei größer als der Radius der Gleitfläche (76). Im Ausführungsbeispiel hat der Faktor den Wert Fünf. Ggf. kann er dem Hebelübersetzungsverhältnis entsprechen, das der Hebel (71, 72) zumindest bei betätigter Vorrichtung aufweist.

Die der Rückenfläche (85) abgewandte Vorderfläche (84) des unteren Abschnittes (83) ist gewölbt gestaltet.

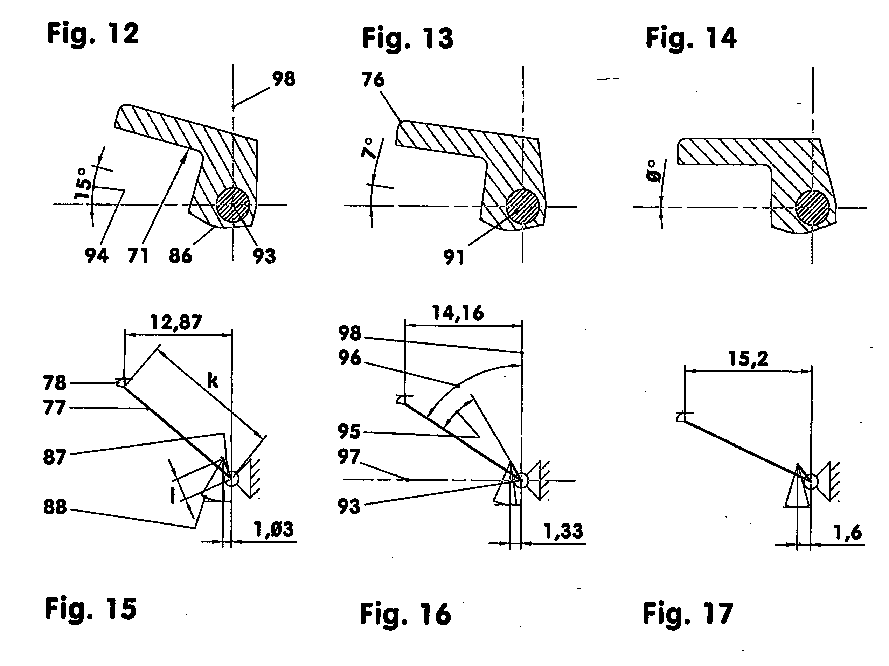

In den Figuren 12 bis 17 ist der konstruktive Aufbau dieser Hebel (71, 72) in drei Schwenkpositionen dargestellt. Die erste Schwenkposition, vgl. Figur 12 und 15, stellt die Startposition des Hebels dar, vgl. auch Figuren 6 und 8. Der Kolben (61) ist nicht mit Druckmittel beaufschlagt.

Die Figuren 14 und 17 zeigen den Hebel (71, 72) in seiner maximalen Endposition, vgl. u.a. Figur 7. Hier liegt der maximal verbrauchte bzw. verschlissene Reibbacken (120) mit noch voller Klemmkraft auf der Führungsschiene (10) auf. Der Hebel ist hier gegenüber der Startposition z.B. um 15 Winkelgrade gegen den Uhrzeiger verschwenkt. Bei einem fabrikneuen Reibbacken (120) beträgt der Schwenkwinkel (94) weniger als 15 Winkelgrade.

Eine mittlere Hebelposition, die der Hebel (71, 72) beim Klemmen und Entlasten jeweils einmal durchläuft, ist in den Figuren 13 und 16 dargestellt. Hier ist der Hebel gegenüber der Startposition um 7,5 Winkelgrade verschwenkt.

Wie die Figuren 15 - 17 zeigen ist der Hebel (71, 72) ein Kniehebel mit einem langen Kraftarm (77) der Länge (k) und einem Lastarm (87) der Länge (1). Hierbei ist (k) z.B. um den Faktor 6,5 länger als (1). Der Kraftarm (77) trägt an seinem freien Ende einen Kreisausschnitt (78), der der Gleitfläche (76) am realen Hebel (71, 72) entspricht, vgl. Figur. 12. Auch der Lastarm (87) hat an seinem freien Ende einen Kreisausschnitt (88). Letzterer entspricht dem der Gleitfläche (86) des unteren Hebelabschnitts (83).

Der Kraftarm (77) und der Lastarm (87) liegen in Richtung des klemmenden Reibbackenhubs bzw. des Lasthubs gesehen hinter einer Ebene (97), die normal zur Richtung des Reibbackenhubs orientiert ist und gleichzeitig auf der Hebelschwenkachse (93) liegt.

Der Kraftarm (77) und der Lastarm (87) schließen einen Winkel von 15 bis 35 Winkelgraden ein. In den Figuren 15 - 17 beträgt der Winkel ca. 27°. Der Lastarm (87) liegt hierbei immer zwischen dem Kraftarm (77) und einer Normalen (98) zu der Ebene (97). Diese Normale (98) ist hier parallel zur Mittellinie (24) der Zylinder-Kolben-Einheit (60) ausgerichtet.

Bei dieser Hebelauslegung hat nach Figur 15 der Kniehebel (71; 72) in der Startposition einen Kraftübersetzungfaktor von ca. 12,5. In der mittleren Position, vgl. Figur 16 hat der Faktor ca. den Wert 10,6. In der Endlage fällt der Wert des Faktors auf 9,5. Demnach nimmt die Hebelübersetzung über den Schwenkwinkel (94) ab. Dies erleichtert erheblich das Anfahren des Kolbens (61). In den Figuren 15-17 sind dazu die wirksamen Hebellängen des dargestellten Ausführungsbeispiels nach den Figuren 1-8 in Millimetern angegeben.

Wird der Kolben (61) mit Druckmittel belastet, bewegen sich die Hebel (71, 72) von der Startposition in die Endposition. Hierbei stellen sie die Reibbacke z.B. 0,35 Millimeter zu.

Nach dem Betätigen der Vorrichtung gehen die Hebel (71, 72) und der Kolben (61) wieder in die Startlage zurück. Als Antrieb hierfür dient das Rückholfederelement (122, 123). Die Reibbacke (120) belastet dabei den Lastarm (87). Zur Unterstützung des Rückholfederelements (122, 123) kann nach Figur 8 an den Hebeln (71, 72) im Übergangsbereich der Vorderflächen (74, 84) eine Nut eingearbeitet werden, in der ein Gummiring (65), ein Federring, eine Wurmfeder oder dergleichen eingelegt wird. Diese Federelemente drücken die Rückenflächen der Hebel (71, 72) gegeneinander.

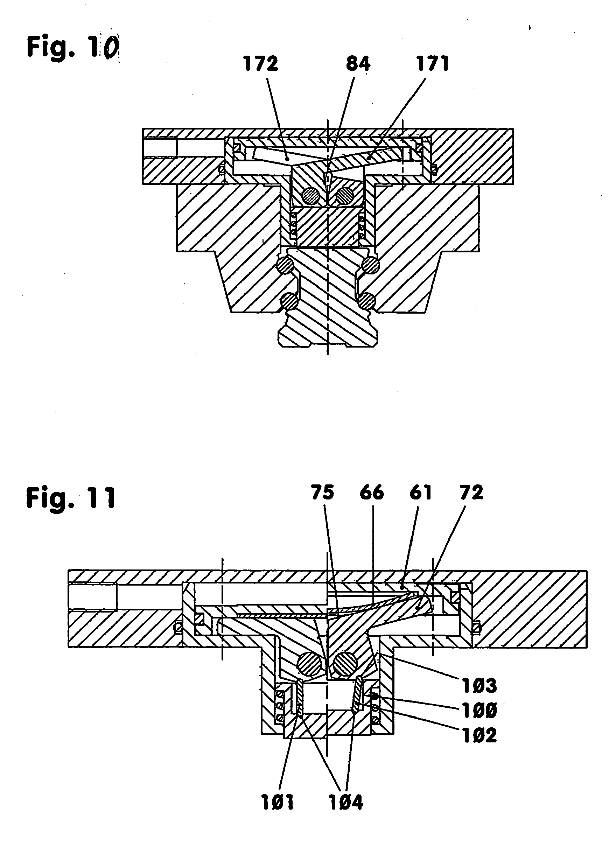

Eine andere Alternative ist in Figur 11 dargestellt. Dort liegt auf den Rückseiten (75) der Hebel (71, 72) eine sichelförmig gebogene Blattfeder (66) auf. Die Blattfeder (66) drückt mit ihrer konvexen Seite gegen die Hebel (71, 72) und mit ihrer konkaven gegen den Kolben (61).

Um die Bewegungen der Hebel (71, 72) einer Vorrichtung zu synchronisieren werden nach Figur 9 auf den Rückseiten der Hebel (71, 72) im näheren Umfeld der Bohrungen (81) Nuten (79) angebracht, in die z.B. ein elastischer Kunststoffstab (89) eingelegt wird. Er ist z.B. vorn und hinten mit einer Kugel ausgestattet, um ein Querwandern zwischen den Nuten zu verhindern. Der Kunststoffstab (89) erzwingt wie eine Verzahnung einen Zwangslauf zwischen den Hebel (71, 72).

Die Hebel (71, 72) nach den Figuren 1 -9 und 11-17 sind in der unteren Gehäusestufe (43) mit einander zugewandten Rückenflächen (85) montiert, vgl. auch Figur 3. Nach Figur (10) sind sie über ihre Vorderflächen (84) zueinander ausgerichtet. Hierdurch lassen sich auf Kosten einer komplizierterenBauteilgestalt größere Hebelverhältnisse realisieren.

Die Vorrichtung lässt sich auch mit nur einem Hebel verwirklichen. Ebenso sind drei und mehr Hebel denkbar. Werden mehr als zwei Hebel verwendet, können diese z.B. im Kreis oder sternförmig angeordnet sein.

Alle dargestellten Hebel sind im Gehäuse (40) über Schwenkbolzen (91, 92) gelagert. Anstelle dieser Schwenkbolzen kann auf der Reibbacke (120) oder einem Reibbackenträger eine Verzahnung angeordnet werden, in der jeweils eine an den Hebeln (71, 72; 171, 172) im Bereich der bisherigen Gleitflächen angebrachte Teilverzahnung kämmt.

In Figur 11 wirken die Hebel (71, 72) über Koppelplatten (101, 102) auf die Reibbacke (120). Dazu sind in den Hebeln (71, 72) und der Reibbacke (120) entsprechende Nuten (103, 104) eingearbeitet, in denen sich die Koppelplatten (101, 102) abstützen können. Die sich pro Koppelplatte (101, 102) gegenüber liegenkönnen. Die sich pro Koppelplatte (101, 102) gegenüber liegenden Nuten (103, 104) fluchten in der Getriebestrecklage parallel zu Lastrichtung in der Endposition. Die Nuten (103, 104) sind gegenüber der Hebelschwenkachse (93) nach außen hin versetzt.

Dieses zweite nachgeschaltete Getriebe ist eine ungleichförmig übersetzende Viergelenkkette mit drei Drehgelenken und einem Schubgelenk. Hierbei ist das Schubgelenk die Reibbacke (120). Das erste Drehgelenk ist' die Lagerung um die Schwenkachse (93) des Hebels (71, 72). Das zweite und dritte Drehgelenk stellen die in den Nuten (103, 104) gelagerten Enden der Koppelplatten (101, 102) dar.

Bei den geometrischen Verhältnissen nach Figur 11 wird bei einer mehrfachen Kraftverstärkung eine ca. 60%ige Hubvergrößerung bewirkt.

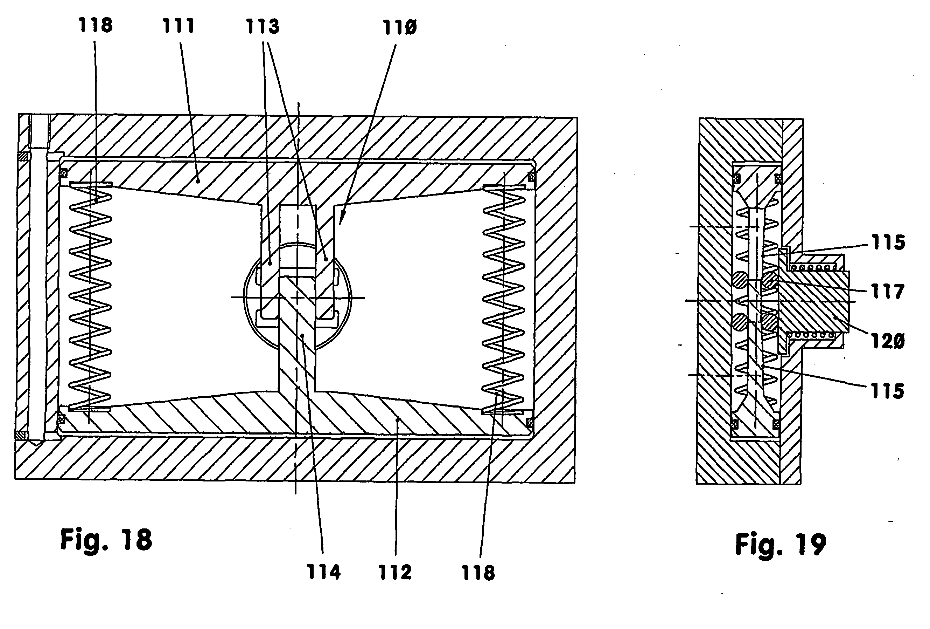

In den Figuren 18 und 19 wird eine Vorrichtung mit einem Doppelschiebekeilgetriebe (110) gezeigt. Um einen Lasthub der Reibbacke (120) zu erzielen werden zwei Schiebekeile (113, 114), von denen jeder an einem Kolben (111, 112) angeformt ist, aufeinander zubewegt. Die Schiebekeile (113, 114) rollen mit ihren Keilflächen (115) über zylindrische Wälzkörper (117) auf der Reibbacke (120) ab. Die Kolben (111, 112) laufen in Zylindern mit z.B. ovalem oder elliptischem Querschnitt. Für den Rückhub werden sie mittels der Schraubenfedern (118) voneinander weg bewegt. Um ein Verkanten der Kolben zu vermeiden werden die als Schiebekeile ausgebildeten Kolbenstangen aneinander geführt.

Eine andere Kraftübersetzung ist z.B. mit Hilfe eines pneumatisch/hydraulischen Druckübersetzers denkbar. Hier taucht z.B. die Kolbenstange einer pneumatisch angetriebenen Zylinder-Kolben-Einheit in einen ölbefüllten Hydraulikraum ein, um über das verdrängte Öl die Reibbacke,zu bewegen.

Selbstverständlich können bei allen Varianten die Elemente (71, 72; 171, 172; 101, 102) der Übersetzungsgetriebe auf die Reibbacke (120) über zwischengeschaltete Bauteile wirken. Auch ist die Klemm- und Bremsvorrichtung nicht auf die Verwendung nur einer Reibbacke beschränkt.

### Bezugszeichenliste:

- 1: Schlitten
- 5: Führungslängsrichtung, Schlittenbewegung
- 6: vertikale Mittenlängsebene

- 10: Führungsschiene, doppeltrapezförmig
- 11: Schienenoberfläche
- 13, 14: Führungsschienenseiten, links, rechts
- 15: Hintergriffskontur, Kugelführungsbahn
- 16: Kugelführungsbahn
- 19: Haltekraft, resultierend

- 20: Führungsschuh
- 21: Kugelführungsbahn
- 22: Hintergriffskontur, Kugelführungsbahn
- 23: Bohrung
- 24: Mittellinie
- 27: Wälzkörper, obere Reihe
- 28: Wälzkörper, untere Reihe

- 30: Adapterplatte
- 31: Sacklochbohrung
- 32: Ringnut
- 33: Boden, plan
- 34: Druckmittelbohrung
- 38: O-Ring

- 40: Gehäuse
- 41: Innenraum
- 43: Gehäusestufe, unten
- 44: Innenwandung
- 45: Boden
- 46: Bohrung, zentral
- 47: Querbohrung

- 53: Gehäusestufe, oben
- 54: Zylinderinnenwandung
- 55: Absatz, plan
- 56: Rand, oben
- 57: Fase
- 58: Nut, radial

- 60: Zylinder-Kolben-Einheit, Antrieb
- 61: Kolben
- 62: Kolbenbohrung, Ausnehmung
- 63: Erhebung
- 64: Zylinderinnenraum
- 65: Rückhubfeder, Gummiring, Ringfeder
- 66: Rückhubfeder, Blattfeder

- 70: Hebelgetriebe
- 71, 72: Hebel, kurz
- 171, 172: Hebel, lang
- 73: Hebelabschnitt, oben
- 74: Vorderfläche
- 75: Rückenfläche
- 76: Gleitfläche
- 77: Kraftarm
- 78: Kreisausschnitt zu (76)
- 79: Nut

- 81: Bohrung
- 83: Hebelabschnitt, unten
- 84: Vorderfläche
- 85: Rückenfläche
- 86: Gleitfläche
- 87: Lastarm
- 88: Kreisausschnitt zu (86)
- 89: Kunststoffstab, elastisch

- 91, 92: Schwenkbolzen
- 93: Hebelschwenkachse
- 94: Schwenkwinkel
- 95: Winkel zwischen (77) und (87)
- 96: Winkel zwischen (77) und (98)
- 97: Ebene
- 98: Normale
- 99: Lastkraft, resultierend

- 100: Koppelplattengetriebe
- 101, 102: Koppelplatten
- 103: Nut im (Hebel)
- 104: Nut in der (Reibbacke)

- 110: Schiebekeilgetriebe
- 111, 112: Kolben, oval
- 113: Schiebekeilpaar
- 114: Schiebekeil
- 115: Keilflächen
- 117: Wälzkörper
- 118: Rückhubfedern, Schraubendruckfedern

- 120: Reibbacke, Schubgelenk
- 121: Kragen
- 122: Rückholfederelement, Schraubenfeder;
- 123: Gummi- oder Kunststoffbauteil

## Patentansprüche

1. Klemm- und/oder Notbremsvorrichtung zur Anbringung an einem mittels mindestens einer Führungsschiene (10) geführten Schlitten (1),
- wobei die Führungsschiene (10) wenigstens eine Hintergriffkontur (15) aufweist,
- wobei die Vorrichtung mindestens ein Reibgehemme umfasst, das wenigstens eine, an die Führungsschiene (10) entgegen der Wirkrichtung der Haltekraft (19) der Hintergriffskontur (15) anpressbare Reibbacke (120) aufweist und
- wobei das Reibgehemme mittels der Federkraft mindestens eines Federelements (122, 123) in eine Richtung und mittels eines pneumatischen, hydraulischen, elektromagnetischen, elektromechanischen oder piezoelektrischen Antriebs (60) erzeugter Vorschubkraft in die entgegengesetzte Richtung bewegt wird,
**dadurch gekennzeichnet,**
- **dass** zwischen dem Antrieb (60) und der Reibbacke (120) mindestens ein einstufiges mechanisches oder pneumatisch/hydraulisches kraftübersetzendes Getriebe (70, 100, 110) angeordnet ist.

2. Vorrichtung gemäß Anspruch 1, **dadurch gekennzeichnet, dass** das mechanische Getriebe (70) ein Hebelgetriebe ist, das die Vorschubkraft des Antriebs (60) mindestens um den Faktor Zwei verstärkt.

3. Vorrichtung gemäß Anspruch 2, **dadurch gekennzeichnet, dass** das Hebelgetriebe (70) mindestens einen Kniehebel (71, 72) aufweist, wobei jeder Kniehebel (71, 72) einen langen Lastarm (77) und einem kurzen Kraftarm (87) hat und beide Arme (77, 87) sich auf der Hebelschwenkachse (93) schneiden und wobei zumindest die Lastrichtung parallel zur Hubrichtung der Reibbacke (120) orientiert ist.

4. Vorrichtung gemäß Anspruch 3, **dadurch gekennzeichnet, dass** bei jedem Kniehebel (71, 72) in jedem Belastungszustand die theoretischen, freien Enden der Arme (77, 87) - in Lastrichtung gesehen - hinter einer Ebene (97) liegen, die sich normal zur Lastrichtung erstreckt und auf der Hebelschwenkachse (93) liegt, dass der Lastarm (87) zwischen dem Kraftarm (77) und einer Normalen (98) der Ebene (97) angeordnet ist, dass der Kraftarm (77) und der Lastarm (87) einen Winkel (95) einschließen, der zwischen 10 und 35 Winkelgraden liegt und dass dieser Winkel (95) immer kleiner ist als der Winkel (96) zwischen dem Kraftarm (77) und der Normalen (98).

5. Vorrichtung gemäß Anspruch 3, **dadurch gekennzeichnet, dass** das Hebelgetriebe zwei baugleiche Kniehebel (71, 72) aufweist.

6. Vorrichtung gemäß Anspruch 5, **dadurch gekennzeichnet, dass** die Kniehebel (71, 72) miteinander zwangsläufig gekoppelt sind.

7. Vorrichtung gemäß Anspruch 1, **dadurch gekennzeichnet, dass** der Antrieb (60) und das Hebelgetriebe (70) in einer Adapterplatte (30) integriert ist, wobei die Adapterplatte (30) zwischen dem Schlitten (1) und einem die Führungsschiene (1) zumindest bereichsweise umgreifenden Führungsschuh (20) montiert ist.

8. Vorrichtung gemäß Anspruch 1, **dadurch gekennzeichnet, dass** dem ersten Getriebe (70) ein zweites Getriebe (100) nachgeschaltet ist.

9. Vorrichtung gemäß Anspruch 8, **dadurch gekennzeichnet, dass** das zweite Getriebe (100) mindestens eine ungleichförmig übersetzende Viergelenkkette mit drei Drehgelenken und einem Schubgelenk (120) ist.

10. Vorrichtung gemäß Anspruch 9, **dadurch gekennzeichnet, dass** das zweite Getriebe (100) als Antriebsglied den Hebel (71, 72), als Koppelglied eine Koppelplatte (101, 102) und als Schubglied den Reibbacke (120) oder dessen Träger hat.

## Claims

1. A clamping and/or emergency braking device to be mounted on a buggy (1) that moves along at least one guide rail (10),
- said guide rail (10) having at least one rear handle profile (15),
- said device being comprised of at least one friction pad having at least one friction yoke (120) that can be pressed against the guide rail (10) in a direction opposite to the effective brake retaining direction (19) of said rear handle profile (15)
- and said friction pad being moved in one direction through the resiliency of at least one spring element (122, 123) and in the opposite direction by the forward feed generated by a pneumatic, hydraulic, electromagnetic, electromechanical or piezoelectric drive (60),
wherein
- at least one single-stage gear - of either mechanical or pneumatic/hydraulic type - (70, 100, 110) is located between said drive (60) and said friction yoke (120) for energy transmission.

2. The device of claim 1, wherein said mechanical gear (70) is a lever mechanism that multiplies the forward feed of said drive (60) by a factor of at least two.

3. The device of claim 2, wherein said lever mechanism (70) is comprised of at least one toggle lever (71, 72), each toggle lever (71, 72) having a longer load arm (77) and a shorter power arm (87), and both lever arms (77, 87) crossing on lever rotation axis (93), and the load direction running at least parallel to friction yoke (120) lift.

4. The device of claim 3, wherein in each load state - seen in the load direction - the theoretical free ends of said arms (77, 87) of each toggle lever (71, 72) are located behind a plane (97) that stretches perpendicularly to load direction and is located on the rotation axis of said lever (93), wherein said load arm (87) is located between said power arm (77) and a line perpendicular (98) to said plane (97), wherein said power arm (77) and said load arm (87) encompass an angle (95) of 10 to 35 degrees, and wherein said angle (95) is always smaller than the angle (96) between said power arm (77) and said perpendicular line (98).

5. The device of claim 3, wherein the lever mechanism is comprised of two toggle levers (71, 72) of identical construction.

6. The device of claim 3, wherein said toggle levers (71, 72) are necessarily coupled with one another.

7. The device of claim 1, wherein said drive (60) and said lever mechanism (70) are integrated in an adapter slab (30), said adapter slab (30) being mounted between said buggy (1) and a guide shoe (20) that encompasses said guide rail (1) - at least in some areas.

8. The device of claim 1, wherein a second mechanism (100) is located downstream of said first mechanism (70).

9. The device of claim 8, wherein said second mechanism (100) is at least a four-bar chain with uneven transmission and three revolute joints and one cylindrical joint (120).

10. The device of claim 9, wherein said second mechanism (100) has said lever (71, 72) as a drive element, a coupling slab (101, 102) as a coupling element, and said friction yoke (120) - or its base - as a thrusting element.

## Revendications

1. Dispositif de serrage et/ou de freinage d'urgence destiné à être monté sur un chariot (1) dirigé au moyen d'au moins un rail-guide (10),
- ledit rail-guide (10) présentant au moins un profil de poignée arrière (15),
- ledit dispositif comprenant au moins un patin à friction qui présente au moins une mâchoire à friction (120) applicable par pression sur ledit rail-guide (10) en sens inverse de la direction effective de l'effort au frein (19) dudit profil de poignée arrière (15)
- et ledit patin à friction étant déplacé dans un sens grâce à la force de tension d'au moins un élément de ressort (122, 123) et, en sens inverse, par une force d'avancement générée par un entraînement pneumatique, hydraulique, électromagnétique, électromécanique ou piézoélectrique (60),
**caractérisé en ce que**
- au moins un organe de commande mécanique ou pneumatico-hydraulique pour la transmission de la force (70, 100, 110), à un étage, est placé entre l'entraînement (60) et ladite mâchoire à friction (120).

2. Dispositif selon la revendication 1, **caractérisé en ce que** l'organisme de commande mécanique (70) est un mécanisme à levier qui multiplie au moins par deux la force d'avance de l'entraînement (60).

3. Dispositif selon la revendication 2, **caractérisé en ce que** le mécanisme à levier (70) comporte au moins un levier coudé (71, 72), chaque levier coudé (71, 72) ayant un bras de charge long (77) et un bras de force court (87) et que les deux bras (77, 87) se coupent sur l'axe de rotation du levier (93), le sens de charge étant au moins orienté parallèlement au sens de levage de la mâchoire de friction (120).

4. Dispositif selon la revendication 3, **caractérisé en ce que** pour chaque levier coudé (71, 72) les extrémités théoriques libres des bras (77, 87) se trouvent à chaque état de charge - vu dans le sens de charge - derrière un plan (97) qui s'étend perpendiculairement par rapport au sens de charge et se trouve sur l'axe de rotation du levier (93), que le bras de charge (87) est placé entre le bras de force (77) et une perpendiculaire (98) au plan (97), que le bras de force (77) et le bras de charge (87) incluent un angle (95) qui fait entre 10 et 35 degrés d'angle et que ledit angle (95) est toujours inférieur à l'angle (96) entre ledit bras de force (77) et ladite perpendiculaire (98).

5. Dispositif selon la revendication 3, **caractérisé en ce que** le mécanisme à levier comporte deux leviers coudés de construction similaire (71, 72).

6. Dispositif selon la revendication 5, **caractérisé en ce que** lesdits leviers coudés (71, 72) sont nécessairement couplés entre eux.

7. Dispositif selon la revendication 1, **caractérisé en ce que** l'entraînement (60) et le mécanisme à levier (70) sont intégrés dans une plaque d'adaptation (30), celle-ci étant montée entre le chariot (1) et un patin de guidage (20) qui enveloppe ledit rail-guide (1), au moins en certains points.

8. Dispositif selon la revendication 1, **caractérisé en ce qu'**un second mécanisme (100) est placé en aval du premier mécanisme (70).

9. Dispositif selon la revendication 8, **caractérisé en ce que** le second mécanisme (100) est au moins une chaîne cinématique à quatre points articulés à transmission inégale ayant trois joints de rotation et un joint coulissant (120).

10. Dispositif selon la revendication 9, **caractérisé en ce que** le second mécanisme (100) comporte le levier (71, 72) comme élément d'entraînement, une plaque de liaison (101, 102) comme élément de liaison et la mâchoire de friction (120) ou son support comme élément de poussée.
